# EUROPÄISCHE PATENTSCHRIFT

(11) **EP 2 569 171 B1**
(45) Veröffentlichungstag und Bekanntmachung des Hinweises auf die Patenterteilung: **14.01.2015**
(21) Anmeldenummer: 11718317.8
(22) Anmeldetag: 19.04.2011
(51) Int. Cl.: B60C 11/12

(54) **FAHRZEUGLUFTREIFEN MIT EINEM LAUFSTREIFEN**
TYRE WITH A TREAD PORTION
PNEU AVEC BANDAGE DE ROULEMENT

(30) Priorität: 11.05.2010 DE 102010016906
(43) Veröffentlichungstag der Anmeldung: 20.03.2013
(73) Patentinhaber: Continental Reifen Deutschland GmbH, 30165 Hannover (DE)
(72) Erfinder: SENG, Matthias, 30449 Hannover (DE); SEIDEL, Michael, 30171 Hannover (DE); LACKO, Michal, 02001 Puchov (DE)
(74) Vertreter: Finger, Karsten
(86) Internationale Anmeldenummer: PCT/EP2011/056190
(87) Internationale Veröffentlichungsnummer: WO 2011/141281

(56) Entgegenhaltungen:
- EP-A2- 0 847 878
- WO-A1-2010/030276
- JP-A- 1 254 406
- JP-A- 7 276 923
- JP-A- 8 080 232
- JP-A- 10 287 110

## Beschreibung

Die Erfindung betrifft einen Fahrzeugluftreifen mit einem Laufstreifen, welcher mit Profilelementen, wie Profilblöcken, Profilrippen und dergleichen versehen ist, welche jeweils mit einer Vielzahl von sich zumindest im Wesentlichen in Laufstreifenquerrichtung erstreckenden Einschnitten versehen sind, welche in ihrem Verlauf lokal an zumindest einer Stelle durch eine lochartige Öffnung verbreitert sind, welche sich in radialer Richtung entlang des Tiefenverlaufes des Einschnittes erstreckt.

Sowohl bei PKW- Reifen als auch bei LKW- Reifen ist es üblich und bekannt, in den Profilelementen des Laufstreifens Einschnitte vorzusehen, insbesondere um die Winterfahreigenschaften des Reifens günstig zu beeinflussen. Bei PKW-Reifen wird durch die Größe des Neigungswinkels der Einschnitte relativ zur Laufstreifenquerrichtung entweder ein größerer Einfluss auf die Traktionseigenschaften oder ein größerer Einfluss auf die Seitenführungseigenschaften des Reifens genommen. Ein auf gute Traktion ausgelegter Laufstreifen weist daher Defizite im Seitenführungsverhalten, ein auf gute Seitenführung ausgelegter Reifen Defizite bei der Traktion auf. Laufstreifen von LKW-Reifen weisen als Profilelemente oft Profilrippen auf, sodass der Rollwiderstand und die Geräuschentwicklung gegenüber Blockprofilen geringer sind. Bei Profilrippen ist es schwieriger, gute Wintereigenschaften und gute Nasstraktion zu erreichen, auch wenn Einschnitte in den Profilrippen vorgesehen sind. Aus der Patentliteratur sind Laufstreifen mit Einschnitten in unterschiedlichsten Ausführungen und Anordnungen bekannt. Beispielsweise zeigt die DE 44 20 316 A1 einen Fahrzeugluftreifen mit einem asymmetrischen Laufstreifen mit Profilrippen mit parallel zueinander verlaufenden geraden Einschnitten und mit einer breiten Profilrippe, welche anstelle von Einschnitten kreisrunde Löcher aufweist. Aus der US 2009/0107601 A1 ist ein Fahrzeugluftreifen mit einem Laufstreifen bekannt, welcher Umfangsbereiche mit unterschiedlich ausgeführten Einschnitten aufweist. Bei dem aus der EP 0 664 230 A2 bekannten Fahrzeugluftreifen sind im Laufstreifen Einschnitte vorgesehen, welche ringartig verlaufen und derart Profilelementinseln umschließen.

Aus der JP 7 276 923 A ist ein gattungsgemäßer Fahrzeugluftreifen bekannt. Zur Verbesserung des Wasserableitvermögens des Laufsteifens dieses Fahrzeugluftreifens sind in den Profilblöcken in axialer Richtung verlaufende den Profilblock durchquerende oder zumindest in eine Umfangsnut mündende Einschnitte ausgebildet. Diese Einschnitte sind jeweils mit einer Anzahl von in radialer Richtung verlaufenden Erweiterungen versehen. Bei dem aus dem JP 1 254 406 A bekannten Fahrzeugluftreifen ist der Laufstreifen mit Profilblöcken versehen, in welchen ebenfalls Einschnitte verlaufen, die mit lochartigen Öffnungen verbreitert sind. Diese Löcher befinden sich entweder an Kreuzungsstellen von Einschnitten oder an freien Enden von Einschnitten. Die JP 10 287 110 A offenbart einen Fahrzeugluftreifen, bei dem in den Profilblöcken des Laufstreifens in axialer Richtung Einschnitte verlaufen, die in Umfangsnuten münden und freie Enden innerhalb der Profilblöcke besitzen, an welchen kleine runde Löcher ausgerichtet sind.

Der Erfindung liegt die Aufgabe zugrunde, bei einem Reifen der eingangs genannten Art durch die Ausführung der Einschnitte im Laufstreifen generell den Schneegriff und vor allem die Traktions- und Bremseigenschaften unter winterlichen Fahrbedingungen und auf Nässe zu verbessern.

Gelöst wird die gestellte Aufgabe erfindungsgemäß dadurch, dass die Einschnitte komplett innerhalb des/der Profilelemente(s) verlaufen, eine Länge von 10 mm bis 15 mm und jeweils ein einziges Loch in ihrem zentralen Bereich aufweisen.

Durch die Löcher in den Einschnitten wird der Schneegriff des Laufstreifens verbessert, da sich in den Löchern Schnee ansammeln kann und dadurch eine Schnee-Schnee-Reibung ermöglicht wird. In Laufstreifen von PKW-Reifen lassen sich mit erfindungsgemäß ausgeführten Einschnitten gute Traktionseigenschaften bei guten Seitenführungseigenschaften erzielen. In Laufstreifen von LKW-Reifen gute Traktionseigenschaften bei hoher Umfangssteifigkeit und damit geringerem Rollwiderstand. Die innerhalb der Profilelemente verlaufenden Einschnitte sind in größerer Anzahl und als kurze Einschnitte vorgesehen. Diese kurzen Einschnitte können eine Breite von etwa 0,1 mm bis 1,0 mm aufweisen. Infolge ihrer Kürze sind sie vor allem auch mit sehr schmalen Lamellenblechen herstellbar. Laufstreifenprofile mit derartigen Einschnitten können daher eine deutlich verbesserte Trockenhandlingperformance bei sehr guter Winterperformance aufweisen.

Bei einer bevorzugten Ausführungsform der Erfindung sind die Löcher in den Einschnitten mittig positioniert. Eine derartige Anordnung der Löcher ist für die Ausgewogenheit der Seitenführungskraft und der Bremskraft auf Schnee von Vorteil. Derart angeordnete Löcher werden insbesondere in Profilelementen von Laufstreifen von Personenkraftwagen vorgesehen.

Bei einer anderen vorteilhaften Ausführungsform der Erfindung sind die Löcher an eine der Einschnittkanten anschließend positioniert. Dabei werden vorzugsweise innerhalb eines Profilelementes sämtliche Löcher, bezogen auf eine der beiden Umfangsrichtungen, an den gleichen Einschnittkanten positioniert. Derart angeordnete Löcher erhöhen den Negativanteil im Profilelement mehr als mittig angeordnete Löcher und sind vor allem in Profilelementen von Laufstreifen für LKW-Reifen für die Traktion auf winterlichen und nassen Fahrbahnen von Vorteil, ohne Nachteile beim Rollenwiderstand und der Geräuschentwicklung zu bewirken.

Die kurzen Einschnitte können entweder einen geraden oder einen etwa eine V-förmigen Verlauf aufweisen, wobei V-förmige Einschnitte jeweils zwei einen stumpfen Winkel einschließende Einschnittabschnitte besitzen, und wobei das Loch an der Knickstelle des Einschnittes angeordnet ist. In den Profilelementen des Laufstreifens können diese Einschnitte in Kombination miteinander vorgesehen sein, es können jedoch auch in den Profilelementen ausschließlich gerade verlaufende oder ausschließlich V-förmig verlaufende Einschnitte vorgesehen sein. Auf diese Weise lassen sich die Umfangs- und die Quersteifigkeit des betreffenden Profilelementes entsprechend beeinflussen.

Auch die gegenseitige Anordnung der kurzen Einschnitte in den Profilelementen nimmt auf die Profilelementsteifigkeit Einfluss. So können beispielsweise die Einschnitte in den Profilelementen in Laufstreifenquerrichtung verlaufenden Reihen angeordnet sein. Bei einer anderen möglichen Ausführungsvariante können einzelne, parallel zueinander verlaufende Einschnitte eine Einschnittgruppe bilden, die sich insbesondere in Umfangsrichtung erstreckt.

Die Löcher können in Draufsicht nahezu beliebige Formen aufweisen, bevorzugt ist eine in Draufsicht runde, insbesondere kreisrunde Form. Von ihrer Dimensionierung her sollten die Löcher derart ausgeführt sein, dass ihr kleinster Durchmesser um mindestens 50 % größer ist als die jeweilige Einschnittbreite, wobei ihre größte Erstreckung das Sechsfache der Einschnittbreite nicht übersteigen sollte.

Weitere Merkmale, Vorteile und Einzelheiten der Erfindung werden nun anhand der Zeichnung, die schematisch mehrere Ausführungsbeispiele darstellt, näher beschrieben. Dabei zeigen

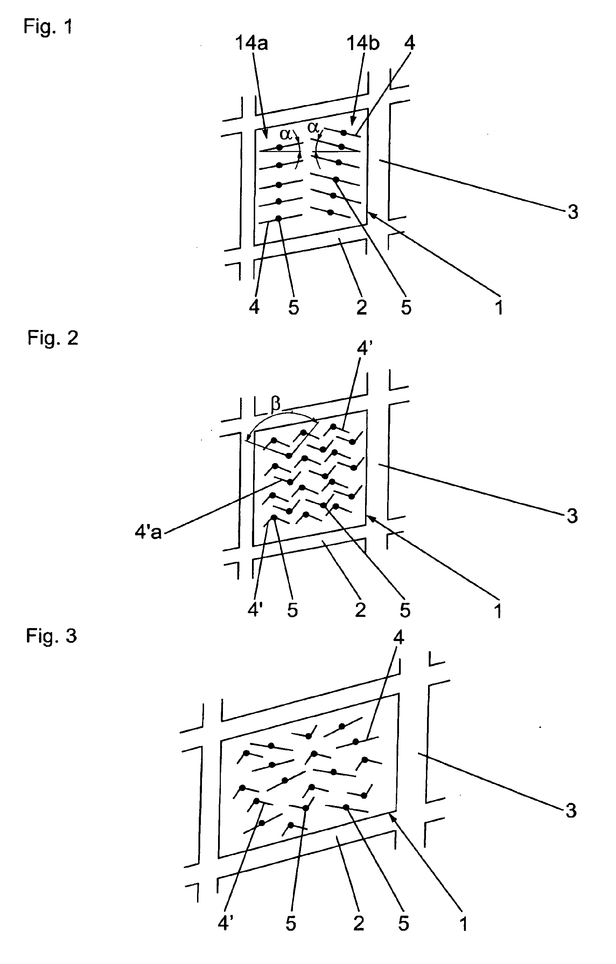

Fig. 1 bis Fig. 5 Draufsichten auf Profilblöcke eines Laufstreifens eines Fahrzeugluftreifens mit unterschiedlichen Ausführungsvarianten der Erfindung.

Die Figuren zeigen Draufsichten auf Profilelemente eines Laufstreifens eines Fahrzeugluftreifens, welcher insbesondere für den Einsatz unter winterlichen Fahrbedingungen, auf Schnee oder Eis, vorgesehen ist. Die in Fig. 1 bis Fig. 5 gezeigten Profilblöcke 1 sind beispielhaft als in Draufsicht parallelogrammförmige Blöcke dargestellt, welche jeweils in Umfangsrichtung des Laufstreifens aneinandergereiht eine Profilblockreihe bilden, die, ein- oder beidseitig - je nach Anordnung- von einer in Umfangsrichtung umlaufenden Umfangsnut 3 begrenzt ist. In Fig. 1 bis Fig. 5 sind jeweils zwei Umfangsnuten 3 und zusätzlich Quernuten 2 angedeutet, welche die Profilblöcke 1 innerhalb einer Profilblockreihe voneinander trennen.

Die in Fig. 1 bis Fig. 5 gezeigten Profilblöcke 1 sind jeweils mit einer Vielzahl von im Wesentlichen in Laufstreifenquerrichtung orientierten Einschnitten 4, 4' versehen, welche eine Breite zwischen 0,1 mm und 1,0 mm aufweisen. Fig. 1 bis Fig. 5 zeigen Ausführungsvarianten mit Einschnitten 4, 4', welche jeweils kurze, komplett innerhalb des Profilblockes 1 verlaufende Einschnitte sind und entweder einen geraden Verlauf-Einschnitte 4 - oder einen V-förmigen Verlauf - Einschnitte 4' - aufweisen. Bei der in Fig. 1 gezeigten Ausführungsform sind im Profilblock 1 ausschließlich Einschnitte 4 vorgesehen, welche jeweils mittig mit einer Öffnung in der Form eines runden Loches 5 versehen sind. Der Durchmesser der Löcher 5 ist größer als die Breite der Einschnitte 4 und beträgt zwischen 0,6 mm und 5,0 mm, in Laufstreifen von PKW-Reifen vorzugsweise bis zu 2,0 mm, in Laufstreifen von LKW-Reifen vorzugsweise zwischen 3,5 mm und 5,0 mm.. Bei Löchern 5, die nicht kreisrund ausgeführt sind, ist der kleinste Durchmesser bzw. ist die kleinste Erstreckung um mindestens 50% größer als die Einschnittbreite. Die Einschnitte 4 sind im Profilblock 1 in zwei Einschnittgruppen 14a, 14b angeordnet, wobei jede Gruppe 14a, 14b aus parallel zueinander verlaufenden und in Umfangsrichtung voneinander beabstandeten Einschnitten 4 besteht. Die Einschnitte 4 innerhalb einer Einschnittgruppe 14a, 14b verlaufen derart, dass sie mit der Reifenquerrichtung einen Winkel α von höchstens 30° einschließen. Die Länge der Einschnitte 4 beträgt je nach Blockabmessungen zwischen 10 mm und 15 mm.

Fig. 2 zeigt einen Profilblock 1 mit in Draufsicht V-förmig verlaufenden Einschnitten 4', wobei bei jedem Einschnitt 4' ein Loch 5 an der Knickstelle des Einschnittes 4' positioniert ist. Die die V-Form bildenden Einschnittabschnitte 4'a weisen eine Länge zwischen 3 mm und 7 mm auf und schließen miteinander einen Winkel β ein, welcher mindestens 25° beträgt. Die Einschnitte 4' sind in Reihen angeordnet, welche in Laufstreifenquerrichtung orientiert sind und jeweils zwei bis vier Einschnitte 4' aufweisen

Die Erstreckungsrichtung der Einschnittreihen weicht von der Laufstreifenquerrichtung um höchstens 30° ab. In einander benachbarten Einschnittreihen sind die Einschnitte 4' in Laufstreifenquerrichtung gegeneinander versetzt und gleichzeitig mit gegengleicher V-Orientierung angeordnet, beispielsweise derart, dass die Löcher 5 der Einschnitte 4' in der einen Reihe jeweils dort positioniert sind, wo sich ein Abstand zwischen den aneinander gereihten Einschnitten 4' der benachbarten Reihe befindet, wie es Fig. 2 zeigt.

Fig. 3 zeigt eine Ausführungsvariante, bei der im Profilblock 1 in Kombination gerade verlaufende Einschnitte 4 mit jeweils einem mittigen Loch 5 - ausgeführt gemäß Fig. 1 - und V-förmige Einschnitte 4' mit jeweils einem Loch 5 an der Knickstelle - ausgeführt gemäß Fig. 2 - angeordnet sind. Die Einschnitte 4,4' erstrecken sich im Wesentlichen in Laufstreifenquerrichtung, wobei der Winkel der geraden Einschnitte 4 relativ zur Laufstreifenquerrichtung variieren kann. Die V-förmigen Einschnitte 4' können mit gegengleichen Anordnungen ihrer V-Form vorgesehen sein. Vorzugsweise ist im Wesentlichen eine weitgehend gleichmäßige Verteilung von geraden und V-förmigen Einschnitten 4, 4' im Profilblock 1 gegeben.

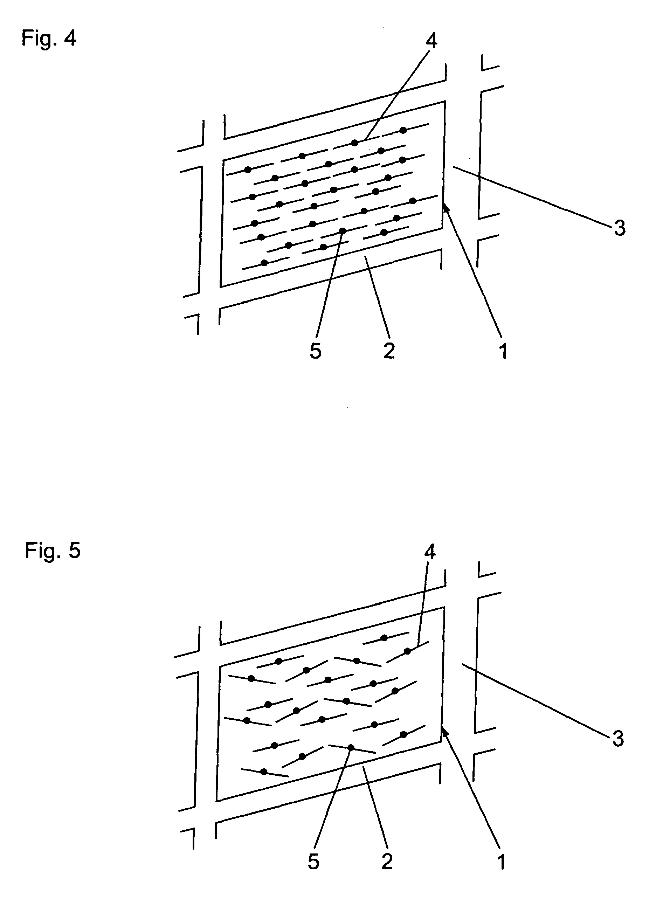

Fig.4 zeigt eine Ausführungsvariante, bei der lediglich gerade Einschnitte 4 - ausgeführt gemäß Fig. 1 - vorgesehen sind, welche in parallel zueinander und in Laufstreifenquerrichtung verlaufenden Reihen angeordnet sind. Bei der gezeigten Variante weist jede Reihe drei oder vier Einschnitte 4 auf, deren Enden einen gegenseitigen Abstand von 1 mm bis 2 mm aufweisen. Die Einschnitte 4 in einander benachbarten Reihen sind insbesondere derart gegeneinander in Laufstreifenquerrichtung versetzt, dass sich die Löcher 5 der Einschnitte 4 in der einen Reihe gegenüber einem Abstand von Einschnitten 4 in der benachbarten Reihe befinden. Der gegenseitige Abstand der Reihen von Einschnitten 4 beträgt 2 mm bis 7 mm, der jeweils letzte Einschnitt 4 in einer Reihe weist einen Abstand von mindestens 1 mm zur jeweils benachbarten Blockkante auf. Die Einschnittreihen sind ferner innerhalb des Profilblockes 1 derart angeordnet, dass sie einen Winkel von höchstens 30° mit der Laufstreifenquerrichtung einschließen.

Fig. 5 zeigt eine Ausführungsvariante mit geraden Einschnitten 4 mit mittigen Löchern 5 mit unterschiedlichen Neigungswinkeln α relativ zur Laufstreifenquerrichtung, wobei der Neigungswinkel α maximal +/- 30° beträgt. Die gegenseitige Anordnung der Einschnitte 4 kann ein im Wesentlichen ein gleichmäßiges "Muster" ergeben.

Die Tiefe der Einschnitte richtet sich danach, ob es sich um Einschnitte in Profilelementen von Laufstreifen für PKW- oder für LKW-Reifen handelt. Die Tiefe der Löcher entspricht insbesondere der Tiefe der Einschnitte, welche bis auf die jeweils vorgesehen Profiltiefe reichen können. Die Löcher können jedoch auch eine größere Tiefe aufweisen als die Einschnittabschnitte, in welchen sie vorgesehen sind. Die Einschnitte können stellenweise bzw. abschnittsweise eine geringer Tiefe als die Profiltiefe aufweisen.

### Bezugsziffernliste

- 1: Profilblock
- 2: Quernut
- 3: Umfangsnut
- 4: Einschnitt
- 4': Einschnitt
- 4": Einschnitt
- 4"': Einschnitt
- 4'a: Einschnittabschnitt
- 5: Loch
- 6: Einschnitt
- 10: Profilrippe
- 11: Einbuchtung
- 14a: Einschnittgruppe
- 14b: Einschnittgruppe
- α: Winkel
- β: Winkel

## Patentansprüche

1. Fahrzeugluftreifen mit einem Laufstreifen, welcher mit Profilelementen, wie Profilblöcken (1), Profilrippen (10) und dergleichen versehen ist, welche jeweils mit einer Vielzahl von sich zumindest im Wesentlichen in Laufstreifenquerrichtung erstreckenden Einschnitten (4, 4') versehen sind, welche in ihrem Verlauf lokal an zumindest einer Stelle durch eine lochartige Öffnung (5) verbreitert sind, welche sich in radialer Richtung entlang des Tiefenverlaufes des Einschnittes (4, 4') erstreckt,
**dadurch gekennzeichnet,**
**dass** die Einschnitte (4, 4') komplett innerhalb des/der Profilelemente(s) (1) verlaufen, eine Länge von 10 mm bis 15 mm und jeweils ein einziges Loch (5) in ihrem zentralen Bereich aufweisen.

2. Fahrzeugluftreifen nach Anspruch 1, **dadurch gekennzeichnet, dass** das Löcher (5) in den Einschnitten (4, 4', 4") mittig positioniert sind.

3. Fahrzeugluftreifen nach Anspruch 1, **dadurch gekennzeichnet, dass** die Löcher an eine Einschnittkante anschließend positioniert sind.

4. Fahrzeugluftreifen nach Anspruch 3, **dadurch gekennzeichnet, dass** innerhalb eines Profilelementes sämtliche Löcher, bezogen auf eine Umfangsrichtung, an den gleichen Einschnittkanten positioniert sind.

5. Fahrzeugluftreifen nach einem der Ansprüche 1 bis 4, **dadurch gekennzeichnet, dass** die Einschnitte (4) gerade verlaufen.

6. Fahrzeugluftreifen nach einem der Ansprüche 1 bis 4, **dadurch gekennzeichnet, dass** die Einschnitte (4') etwa V-förmig verlaufen und zwei einen stumpfen Winkel einschließende Einschnittabschnitte (4'a) aufweisen, wobei das Loch (5) an der Knickstelle des Einschnittes (4') angeordnet ist.

7. Fahrzeugluftreifen nach einem der Ansprüche 1 bis 6, **dadurch gekennzeichnet, dass** Profilelemente (1) vorgesehen sind, in welchen die Einschnitte (4, 4') in in Laufstreifenquerrichtung verlaufenden Reihen angeordnet sind.

8. Fahrzeugluftreifen nach einem der Ansprüche 1 bis 6, **dadurch gekennzeichnet, dass** Profilelemente (1) vorgesehen sind, in welchen einzelne, parallel zueinander verlaufende Einschnitte (4) innerhalb einer Einschnittgruppe (14a, 14b), die sich in Umfangsrichtung erstreckt, angeordnet sind.

9. Fahrzeugluftreifen nach einem der Ansprüche 1 bis 8, **dadurch gekennzeichnet, dass** innerhalb eines Profilelementes (1) in Kombination gerade verlaufende und V-förmig verlaufende Einschnitte (4, 4') angeordnet sind.

10. Fahrzeugluftreifen nach einem der Ansprüche 1 bis 9, **dadurch gekennzeichnet, dass** die Löcher (5) in Draufsicht eine runde, insbesondere kreisrunde, Form aufweisen.

11. Fahrzeugluftreifen nach einem der Ansprüche 1 bis 10, **dadurch gekennzeichnet, dass** der kleinste Durchmesser der Löcher (5) um mindestens um 50% größer ist als die jeweilige Einschnittbreite.

## Claims

1. Pneumatic vehicle tyre having a tread, which is provided with profile elements such as profile blocks (1), profile ribs (10) and the like, which are each provided with a multiplicity of sipes (4, 4') that extend at least substantially in the transverse direction of the tread and in the course of their extent are widened locally at at least one location by a hole-like opening (5), which extends in the radial direction along the course of the depth of the sipe (4, 4'), **characterized in that** the sipes (4, 4') extend completely within the profile element (s) (1), have a length of 10 mm to 15 mm and each have a single hole (5) in their central region.

2. Pneumatic vehicle tyre according to Claim 1, **characterized in that** the holes (5) are positioned centrally in the sipes (4, 4', 4").

3. Pneumatic vehicle tyre according to Claim 1, **characterized in that** the holes are positioned adjoining a sipe edge.

4. Pneumatic vehicle tyre according to Claim 3, **characterized in that** all of the holes within a profile element are positioned at the same sipe edges, with respect to a circumferential direction.

5. Pneumatic vehicle tyre according to one of Claims 1 to 4, **characterized in that** the sipes (4) extend in a straight line.

6. Pneumatic vehicle tyre according to one of Claims 1 to 4, **characterized in that** the sipes (4') extend over an approximately V-shaped course and have two sipe portions (4'a) forming an obtuse angle, the hole (5) being arranged at the point of inflection of the sipe (4').

7. Pneumatic vehicle tyre according to one of Claims 1 to 6, **characterized in that** profile elements (1) in which the sipes (4, 4') are arranged in rows extending in the transverse direction of the tread are provided.

8. Pneumatic vehicle tyre according to one of Claims 1 to 6, **characterized in that** profile elements (1) in which individual, parallel-extending sipes (4) arranged within a group of sipes (14a, 14b) that extends in the circumferential direction are provided.

9. Pneumatic vehicle tyre according to one of Claims 1 to 8, **characterized in that** straight-extending and V-shaped-extending sipes (4, 4') are arranged in combination within a profile element (1).

10. Pneumatic vehicle tyre according to one of Claims 1 to 9, **characterized in that** the holes (5) have a round, in particular circular, form in plan view.

11. Pneumatic vehicle tyre according to one of Claims 1 to 10, **characterized in that** the smallest diameter of the holes (5) is greater by at least 50% than the respective width of the sipe.

## Revendications

1. Bandage pneumatique pour roue de véhicule, présentant une bande de roulement dotée d'éléments profilés, par exemple des blocs profilés (1), des rainures profilées (10) et similaires, tous dotés de plusieurs entailles (4, 4') qui s'étendent essentiellement dans le sens transversal de la bande de roulement et qui s'élargissent localement en au moins un emplacement par une ouverture (5) en forme de trou qui s'étend dans le sens de la profondeur de l'entaille (4, 4') et dans la direction radiale,
**caractérisé en ce que**
les entailles (4, 4') s'étendent complètement à l'intérieur du ou des éléments profilés (1), ont une longueur de 10 mm à 15 mm et présentent toutes un seul trou (5) dans leur partie centrale.

2. Bandage pneumatique pour roue de véhicule selon la revendication 1, **caractérisé en ce que** des trous (5) sont disposés au milieu des entailles (4, 4', 4").

3. Bandage pneumatique pour roue de véhicule selon la revendication 1, **caractérisé en ce que** les trous sont placés en position adjacente à un bord de l'entaille.

4. Bandage pneumatique pour roue de véhicule selon la revendication 3, **caractérisé en ce que** tous les trous sont disposés à l'intérieur d'un élément profilé sur le même côté de l'entaille dans la direction périphérique.

5. Bandage pneumatique pour roue de véhicule selon l'une des revendications 1 à 4, **caractérisé en ce que** les entailles (4) s'étendent en ligne droite.

6. Bandage pneumatique pour roue de véhicule selon l'une des revendications 1 à 4, **caractérisé en ce que** les entailles (4') s'étendent sensiblement en forme de V et présentent deux parties (4'a) formant un angle obtus, le trou (5) étant disposé à l'emplacement du coude de l'entaille (4').

7. Bandage pneumatique pour roue de véhicule selon l'une des revendications 1 à 6, **caractérisé en ce que** des éléments profilés (1) dans lesquels les entailles (4, 4') sont disposées en rangées qui s'étendent dans la direction transversale de la bande de roulement sont prévus.

8. Bandage pneumatique pour roue de véhicule selon l'une des revendications 1 à 6, **caractérisé en ce que** des éléments profilés (1) dans lesquels certaines entailles (4) s'étendant parallèlement les unes aux autres sont disposées à l'intérieur d'un groupe (14a, 14b) d'entailles qui s'étendent dans la direction périphérique sont prévus.

9. Bandage pneumatique pour roue de véhicule selon l'une des revendications 1 à 8, **caractérisé en ce que** des entailles (4, 4') s'étendant en ligne droite et s'étendant en forme de V sont disposées à l'intérieur d'un élément profilé (1).

10. Bandage pneumatique pour roue de véhicule selon l'une des revendications 1 à 9, **caractérisé en ce que** les trous (5) présentent dans une vue en plan une forme arrondie et en particulier circulaire.

11. Bandage pneumatique pour roue de véhicule selon l'une des revendications 1 à 10, **caractérisé en ce que** le plus petit diamètre des trous (5) est d'au moins 50 % plus grand que la largeur de l'entaille correspondante.
